# EUROPEAN PATENT APPLICATION

(11) **EP 1 482 582 A2**
(43) Date of publication of application: **01.12.2004**
(21) Application number: 04008610.0
(22) Date of filing: 08.04.2004
(51) Int. Cl.: H01M 4/36, H01M 4/58, H01M 10/40

(54) **High-speed charging/discharging electrode and battery**

(30) Priority: 01.05.2003 JP 2003126235
(71) Applicant: NISSAN MOTOR CO., LTD., Yokohama-shi Kanagawa-ken (JP)
(72) Inventor: Nagayama, Mori, Yokohama-shi kanagawa-ken (JP)
(74) Representative: Weber, Joachim, Dr.

(57) **Abstract**

The present invention provides an anode electrode for a secondary battery. The anode electrode is characterized in that the anode layer thickness is 30 µm or less, and that there is used, as an anode material, at least one of: oxide, sulfide and salt of metal which forms an alloy with lithium; and boron-added carbon. Adoption of the anode electrode of the present invention allows to obtain a lithium ion secondary battery which is capable of avoiding deposition of lithium even by high-speed discharge and charge with a larger electric current and which has a higher energy density.

## Description

### BACKGROUND OF THE INVENTION

### 1. Field of the Invention

The present invention relates to a high-speed charging/discharging electrode and a battery using the electrode.

### 2. Description of the Related Art

Although anode active materials for lithium ion secondary batteries typically included lithium metal or lithium alloy, adoption of such active materials resulted in growth of lithium metal into dendritic shapes during discharge and charge, thereby causing a safety problem of the batteries such as due to internal short circuit and/or the higher activities of the dendritic lithium metal. Further, the above constitution had such defects that 5 to 10 hours were required to charge the battery thereby deteriorating a high-speed charging ability while the cycle life was short, so that the above active materials were inappropriate for high-speed charging/discharging anode electrodes.

Accordingly, there are being practically used amorphous carbon or graphite into and from which lithium metal can be intercalated and deintercalated. However, since amorphous carbon and graphite have electroconductivity in themselves, there is caused a problem that lithium metal is deposited on an anode active material such as amorphous carbon or graphite in trying to make a lithium ion secondary battery capable of high-speed discharge and charge with a larger electric current, also resulting in deposition of dendritic lithium metal. Concretely, in case of a larger electric current upon achieving high-speed charge, the deposition of lithium metal onto a surface of an anode electrode, which is not caused by discharge and charge with an ordinary electric current, is caused by an extremely slight variance of potential, concretely about several tens mV within the electrode such as due to thickness variance and/or composition variance within the electrode and electrolyte. Such deposition of lithium metal is a problem which seriously deteriorates the safety of battery and affects the cycle life thereof. Further, anode layer thicknesses of lithium ion secondary batteries adopting amorphous carbon or graphite having the above revealed problems are provided in an extremely wide range depending on the usage including small-sized and large-sized batteries, i.e., in a range of about 50 to 100 µm in case of practiced batteries, and even in a range of about 1 to 200 µm which is the widest available range such as described in literatures. Due to such an extremely wide range, it has been considered to be actually impossible to solve the above-mentioned problem in lithium ion secondary batteries adopting amorphous carbon or graphite.

There has been thus proposed a lithium ion secondary battery having an anode electrode adapted to high-speed charge in a manner to employ LiMn₂O₄ as a cathode active material and Li₄Ti₅O₁₂ and natural graphite as an anode active material such that the capacity of Li₄Ti₅O₁₂ is 0.9 times that of the cathode and such that the capacity of the whole anode is 1.2 times that of the cathode (see Japanese Patent Application Laid-open No. 2000-348725). During charge of this lithium ion secondary battery, the anode potential initially progresses at 1.5 V which is a plateau potential of Li₄Ti₅O₁₂, and the anode potential drops down to 0.1 V when the intercalation of lithium is changed over from Li₄Ti₅O₁₂ to the natural graphite. It is asserted that the charge can be controlled based on the anode potential, by regarding the time point of the changeover as a charge termination point.

### SUMMARY OF THE INVENTION

However, the lithium ion secondary battery described in the above publication theoretically requires that the anode is once kept at the considerably higher potential so as to detect the charge termination, thereby problematically decreasing a potential difference between the anode and cathode and deteriorating the energy density of the anode.

The present invention has been carried out in view of the above circumstances, and it is therefore an object of the present invention to provide a high-speed charging/discharging electrode and a battery using the electrode, which are capable of avoiding deposition of lithium even by high-speed discharge and charge with a larger electric current and which have higher energy densities.

The first aspect of the present invention provides an anode electrode for a secondary battery having a cathode and an anode for releasing and receiving the same kind of metal ion therebetween, comprising: an anode layer including at least one of: oxide, sulfide and salt of other metal which forms an alloy with the metal to be obtained by reducing the metal ion; and boron-added carbon, wherein the anode layer has a thickness of 30 µm or less.

The second aspect of the present invention provides an anode electrode for a secondary battery having a cathode and an anode for releasing and receiving the same kind of metal ion therebetween, comprising: an anode layer including carbonaceous material; wherein the anode layer has a thickness less than 1 µm.

The third aspect of the present invention provides a lithium ion secondary battery, comprising: an anode electrode including an anode layer having at least one of: oxide, sulfide and salt of metal which forms an alloy with lithium; and boron-added carbon; a cathode electrode including a cathode layer; and an electrolyte interposed between the cathode electrode and the anode electrode; wherein the anode layer has a thickness of 30 µm or less.

The fourth aspect of the present invention provides a lithium ion secondary battery, comprising: an anode electrode including an anode layer having carbonaceous material; a cathode electrode including a cathode layer; and an electrolyte interposed between the cathode electrode and the anode electrode; wherein the anode layer has a thickness less than 1 µm.

### BRIEF DESCRIPTION OF THE DRAWINGS

The invention will now be described with reference to the accompanying drawings wherein;
FIG. 1 is a cross-sectional view schematically showing a basic structure of a lithium ion secondary battery of the present invention which is not a bipolar type;
FIG. 2 is a cross-sectional view schematically showing a basic structure of a bipolar battery of the present invention;
FIG. 3 is a cross-sectional view schematically showing another basic structure of the bipolar battery of the present invention;
FIG. 4 is a perspective view showing an assembled battery of the present invention;
FIG. 5 is a schematic view of a vehicle provided with the assembled battery of the present invention; and
FIGS. 6 and 7 are tables showing evaluation results of Examples of the present invention and Comparative Examples, respectively.

### DETAILED DESCRIPTION OF THE PREFERRED EMBODIMENT

Hereinafter, description will be made of embodiments of the present invention with reference to the drawings.

The present invention provides a first embodiment of an anode electrode for a secondary battery having a cathode and an anode for releasing and receiving therebetween the same kind of metal ion, characterized in that the anode layer has a thickness of 30 µm or less, and that there is used, as an anode material, at least one of: oxide, sulfide or salt of other metal which forms an alloy with the metal to be obtained by reducing the metal ion; and boron-added carbon. Namely, the anode electrode is characterized in that any one or more of the oxide, sulfide or salt and the boron-added carbon is/are adopted as the anode active material. Adoption of the above anode material leads to a raised anode potential as compared with typical amorphous carbon and graphite so that the metal ion is rendered to hardly deposit as the metal on the electrode surface, thereby allowing to provide an anode electrode for a secondary battery suitable for high-speed discharge and charge with a larger electric current as well as a secondary battery adopting such an anode electrode.

In the anode electrode of the first embodiment, anode layer thicknesses exceeding 30 µm fail to avoid deposition of lithium metal even by adopting the anode material. This is because, anodes having anode layer thicknesses exceeding 30 µm lead to an excessively increased variance of potential within the electrodes, so that the potential is obliged to reach a level for lithium deposition even by adopting the metal oxide, metal sulfide or boron-added carbon. Contrary, although the lower limit of the anode layer thickness is not to be particularly defined, the anode layer thickness is preferably 1 µm or more. This is because, although anode layer thicknesses of 30 µm or less are excellent in that the potential variance within the electrode is decreased and deposition of lithium metal can be prevented, anode layer thicknesses less than 1 µm restrict the amount of anode active material and lead to a decreased volumetric efficiency of the anode active material relative to other battery constituent members, thereby possibly restricting the capacity for charge and discharge. This may restrict the usage of the battery. Thus, the anode layer thickness is preferably 30 µm or less, and 1 µm or more.

Anode materials usable for the anode electrode of the first embodiment may include at least one of: oxide, sulfide or salt of other metal which forms an alloy with the metal to be obtained by reducing the metal ion; and boron-added carbon. This is because, adoption of these materials leads to a raised anode potential relative to typical amorphous carbon and graphite, thereby making it difficult for lithium to be deposited.

Oxides of the other metal which forms an alloy with the metal to be obtained by reducing the metal ion, include oxides of tin (Sn), germanium (Ge), indium (In), lead (Pb), silver (Ag), and antimony (Sb). Concretely, the oxides exemplarily include SnO, SnO₂, GeO, GeO₂, In₂O₃, PbO, PbO₂, Pb₂O₃, Pb₃O₄, Ag₂O, AgO, Sb₂O₃, Sb₂O₄ and Sb₂O₅, without limited thereto.

Sulfides of the other metal which forms an alloy with the metal to be obtained by reducing the metal ion, include sulfides of Sn, Ge, In, Pb, Ag and Sb. Concretely, the sulfides exemplarily include SnS, SnS₂, GeS, GeS₂, InS, In₂S₃, PbS, Ag₂S, Sb₂S₃, and Sb₂Sₛ, without limited thereto.

Salts of the other metal which forms an alloy with the metal to be obtained by reducing the metal ion, include metal salts of inorganic acid such as carbonate, sulfate, phosphate and nitrate of Sn, Ge, In, Pb, Ag, and Sb, and metal salts of organic acid such as oxalate. Concretely, the metal salts exemplarily include SnSO₄, SnC₂O₄, In(NO₃)₃, In₂(SO₄)₃, PbC₂O₄, PbCO₃, Pb(NO₃)₂, Pb₃(PO₄)₂, PbSO₄, Ag₂CO₃, AgNO₃, Ag₂SO₄, and Sb₂(SO₄)₃, without limited thereto.

The above boron-added carbon exemplarily includes boron-added amorphous carbon and boron-added graphite, without limited thereto. Although the content of the boron-added carbon is not particularly limited insofar as exhibiting the functions and effects of the present invention and can be hardly defined unequivocally because such a content exemplarily varies depending on the type of carbon material, the content is desirably and typically within a range from 0.1 to 10% by weight, and preferably a range from 0.1 to 5% by weight. The above boron-added carbon exemplarily and concretely includes those listed in the following items (i) through (iii).
(i): Boron-added graphite in which β-site carbon within a hexagonal network plane in a graphite structure are at least partially substituted by boron. The content of boron in such boron-added graphite is preferably within a range from 0.1 to 2% by weight.
(ii): Boron-added carbon to be obtained by baking a carbon material added with a boron compound. In the boron-added carbon, the content of boron in the carbon material is preferably within a range from 0.1 to 10% by weight. The boron compound exemplarily includes H₃BO₃, boron metal and B₂O₃, and one or two or more of them can be used solely or combinedly. Additionally to natural graphite, the carbon material exemplarily includes those to be obtained by baking pitch, coal tar, coke, wooden raw material, furan resin, cellulose, polyacrylonitrile (PAN), and rayon, and one or two or more of them can be used solely or combinedly. The baking conditions are not particularly limited, and it is enough to bake an applicable substance for about 10 hours at about 1,000 °C in an inert atmosphere such as argon gas.
(iii): Boron-added carbon to be obtained by carbonizing an organic material, and including 0.1 to 10% by weight, and preferably 0.1 to 2.0% by weight of boron. The organic material exemplarily includes arbitrary organic polymeric compounds such as: conjugate resins including a phenol resin, acrylic resin, polyvinyl halide resin, polyamide imide resin, polyamide resin, polyacetylene, poly(p-phenylene); and cellulose resin. Also preferable is a furan resin comprising homopolymer or copolymer of furfuryl alcohol or furfural. Concretely, the furan resin includes polymers exemplarily comprising: furfuryl alcohol; furfuryl alcohol + dimethylolurea; furfuryl alcohol + formaldehyde; furfural + phenol; furfural + ketones. The boron-added carbon obtained by carbonizing the furan resin has a lattice spacing d₀₀₂ of 3.70 angstroms for a (002) plane and has no heat-generating peaks at or above 700 °C in a differential thermal analysis (DTA), thereby exhibiting extremely excellent characteristics as an anode material of a battery. It is also possible to adopt: fused polycyclic compounds such as naphthalene, phenanthrene, anthracene, triphenylene, pyrene, chrysene, naphthacene, picene, perylene, pentaphene, pentacene; derivatives thereof (such as carboxylic acid, carboxylic anhydride, carboxylic imide of each of the compounds); various pitches containing mixtures of the above compounds, as main components; fused heterocyclic compounds such as indole, isoindole, quino boron, isoquino boron, quinoxa boron, phthalazine, carbazole, acridine, phenazine, and phenanthridine; and derivatives thereof. These organic materials are carbonized by a heat treatment such as baking. Carbonizing temperatures differ depending on starting materials, and are typically set at 500 to 3,000 °C. Addition of the above defined amount of a boron compound upon carbonization allows to obtain a desired boron-added carbon. The boron compounds exemplarily embrace: oxides of boron, such as diboron dioxide, diboron trioxide, tetraboron trioxide, tetraboron pentoxide; and oxo acid of boron, such as orthoboric acid, metaboric acid, tetraboric acid and hypoboric acid, as well as salts thereof. Any of these boron compounds can be added into a reaction system for carbonization, by preparing the compound in a state of aqueous solution. In the above boron-added carbon, the added amount of the boron compound upon carbonizing the organic material is within a range from 0.15 to 12.5% by weight, and preferably 0.15 to 2.5% by weight in terms of boron, relative to the organic material. It is also desirable that the content of boron within the boron-added carbon is within a range from 0.1 to 10% by weight, and preferably 0.1 to 2.0% by weight.

It is enough for the anode material in the first embodiment to include, as an anode active material, at least one of: oxide, sulfide or salt of other metal which forms an alloy with the metal to be obtained by reducing the metal ion; and boron-added carbon. Other material components are not particularly limited, and are appropriately determined such as depending on the kind and usage of an applicable battery. While the present invention will be described hereinafter based on a situation where the anode material is utilized as an anode electrode for a lithium ion secondary battery, it is apparent that the present invention is not limited thereto.

In addition to the above anode active material component, the anode material in the first embodiment may include other anode active material insofar as within a range not deteriorating the functions and effects of the present invention. Moreover, it is also possible to additionally include: a conductive material for enhancing electron conductivity; a binder; a supporting salt to be added into the electrolyte so as to enhance the ionic conductivity; and a polymer electrolyte. The polymer electrolyte includes a polymer gel electrolyte and a solid polymer electrolyte. Note that it is enough to include a binder for mutually binding anode active material particles and to include a conductive material for enhancing the electron conductivity in case of adopting the polymer gel electrolyte in the electrolyte layer, and it is possible to omit a host polymer, an electrolysis solution and lithium salt as the constituent materials of the polymer electrolyte. Also in a case of adopting an electrolyte in a solution state for the electrolyte layer, it is possible to omit a host polymer, an electrolysis solution and lithium salt as the constituent materials of the polymer electrolyte.

Additionally to the anode active material component, it is possible to adopt the following, as the anode active material within a range not deteriorating the functions and effects of the present invention. Concretely, it is possible to exemplarily adopt a metal compound, metal oxide, Li metal compound, and Li metal oxide. These may be adopted solely based on one kind or combinedly based on two or more kinds. LiAl, LiZn, Li₃Bi, Li₃Cd, Li₃Sd, Li₄Si, Li_{4.4}Pb, Li_{4.4}Sn, and Li_{0.17}C(LiC₆) are usable and selectable as the metal compound. SiO, ZnO, CoO, NiO, and FeO are usable and selectable as the metal oxide. Li₃FeN₂, Li_{2.6}Co_{0.4}N, and Li_{2.6}Cu_{0.4}N are usable and selectable as the Li metal oxide. Lithium-titanium composite oxides represented by LiₓTi_{y}O_{z} such as Li₄Ti₅O₁₂ are usable and selectable as the Li metal oxide.

The constituent materials for the anode electrode can take different shapes such as depending on the types of the materials, and exemplarily include planar plate, corrugated plate, rod-like, and powdery shapes, without limited thereto, and any shape can be used without problems. Preferably, it is desirable to appropriately select an optimum shape capable of improving battery characteristics such as discharge/charge characteristics, depending on the kind of the constituent material of the anode electrode.

Also, the microstructures of the constituent materials for the anode electrode can take different shapes such as depending on the types of materials, and exemplarily include laminar, spherical, fibrous, spiral and fibril shapes, without limited thereto. Although any of the microstructures can be used without problems, it is preferable to appropriately select one having an optimum microstructure capable of improving the battery characteristics such as discharge/charge characteristics, depending on the kind of the constituent material of the anode electrode.

Concerning the particle diameter of the anode active material of the first embodiment according to the present invention, fine particles of the anode active material desirably have an averaged particle diameter within a range from 0.1 to 15 µm, and preferably 0.5 to 10 µm, because of the necessity to attain the anode layer thickness of 30 µm or less and to decrease the potential variance within the electrode.

The above conductive material exemplarily includes acetylene black, carbon black, and graphite, without limited thereto.

Polyvinylidene fluoride (PVDF), styrene butadiene rubber (SBR) and polyimide are usable as the above binder, without limited thereto.
anion salt of inorganic acid such as LiPF₆, LiBF₄, LiClO₄, LiAsF₆, LiTaF₆, LiAlCl₄, and Li₂B₁₀Cl₁₀, anion salt of organic acid such as Li(CF₃SO₂)₂N and Li(C₂F₅SO₂)₂N, and a mixture thereof are exemplarily usable as the above supporting salt for enhancing the ionic conductivity, without limited thereto.

The above polymer gel electrolyte is obtained by including an electrolysis solution to be used in the lithium ion secondary battery into the solid polymer electrolyte having ionic conductivity, and further embraces one to be obtained by including the same electrolysis solution into a frame of polymer (host polymer) without having lithium ion conductivity.

The solid polymer electrolytes having ionic conductivity exemplarily include polyethylene oxide (PEO), polypropylene oxide (PPO), and copolymer thereof.

The electrolysis solution is not particularly limited, and it is possible to appropriately use various ones. The electrolysis solution is constituted of an electrolytic salt and a plasticizer. The electrolytic salt includes at least one kind of lithium salt selected from anion salt of inorganic acid such as LiPF₆, LiBF₄, LiClO₄, LiAsF₆, LiTaF₆, LiAlCl₄, and Li₂B₁₀Cl₁₀, anion salt of organic acid such as LiCF₃SO₃, Li(CF₃SO₂)₂N and Li(C₂F₅SO₂)₂N. The plasticizer includes a solvent provided by mixing at least one kind or two or more kinds to be selected from: cyclic carbonates such as propylene carbonate, ethylene carbonate; linear carbonates such as dimethyl carbonate, ethylmethyl carbonate, diethyl carbonate; ethers such as tetrahydrofuran, 2-methyl tetrahydrofuran, 1,4-dioxane, 1,2-dimethoxy ethane, 1,2-dibutoxy ethane; lactones such as γ-butyrolactone; nitryls such as acetonitrile; esters such as methyl proprionate; amides such as dimethyl formamide; methyl acetate and methyl formate; without limited thereto.

Polyvinylidene fluoride (PVDF), polyvinyl chloride (PVC), polyacrylonitrile (PAN), polymethyl methacrylate (PMMA) are exemplarily usable as the polymer (host polymer) to be adopted for the polymer gel electrolyte and without having lithium ion conductivity, without limited thereto.

The mass ratio of the host polymer to the electrolysis solution within the polymer gel electrolyte can be determined such as depending on the usage, and is preferably within a range from 2:98 to 90:10. Namely, it is possible to effectively seal the oozing of the electrolysis solution from the polymer gel electrolyte, by forming an insulation layer to be described later. Thus, also the mass ratio of the host polymer to the electrolysis solution within the polymer gel electrolyte can be settled by relatively prioritizing the battery characteristics.

The present invention further provides a second embodiment of an anode electrode for a secondary battery having a cathode and an anode for releasing and receiving therebetween the same kind of metal ion, characterized in that the anode electrode comprises an anode layer having a thickness less than 1 µm, and that the anode material includes a carbonaceous material. Also in this case, there can be exhibited the same functions and effects as the above described first embodiment.

The anode electrode according to the second embodiment of the present invention has the anode layer thickness less than 1 µm. Thus, that variance degree of the amount of the active material which causes the potential variance can be remarkably decreased even in case of the carbonaceous material such as the conventional amorphous carbon and graphite, by virtue of the lamellation of the layer thickness less than 1 µm which has not been achieved in the conventional. This enables to avoid deposition of lithium, since the potential of the electrode never reaches a level for lithium deposition even in the presence of potential variance within the electrode. Note that the lower limit value of the anode layer thickness is not particularly limited, and is to be realizable down to a layer thickness as a manufacturing limit. Namely, such lamellation is sufficiently possible, such as by virtue of the particle diameter of active material to be used and the advancement in a coat forming technique.

Various carbonaceous materials, such as amorphous carbon and graphite are usable as the anode material in the second embodiment.

While it is enough for the anode electrode in the second embodiment to include the above carbonaceous material as the anode active material, other material components are not particularly limited and various ones are applicable such as depending on the kind and usage of the applicable battery. Although the present invention will be described hereinafter based on a situation where the anode material is utilized as an anode electrode for a lithium ion secondary battery, it is apparent that the present invention is not limited thereto.

In addition to the above anode active material component, the anode electrode in the second embodiment may include other anode active material insofar as within a range not deteriorating the functions and effects of the present invention. Moreover, it is also possible to additionally include: a conductive material for enhancing electron conductivity; a binder; a supporting salt for enhancing the ionic conductivity; and a polymer electrolyte. These are the same as those explained in the anode electrode according to the first embodiment of the present invention and thus the explanation thereof shall be omitted here, except for the particle diameter of the anode active material.

Concerning the particle diameter of the anode active material of the second embodiment according to the present invention, fine particles of the anode active material desirably have an averaged particle diameter within a range from 5% to 100%, and preferably 10% to 50% relative to an anode layer thickness, because of the necessity to attain the anode layer thickness less than 1 µm and to decrease the potential variance within the electrode.

In the anode electrode according to the second embodiment of the present invention, the blending amounts of the anode active material, conductive material, binder, polymer electrolyte (such as host polymer and electrolysis solution) and lithium salt are to be determined in view of the usage (such as importance of output or energy) of an applicable battery and the associated ionic conductivity.

The anode electrodes according to the first and second embodiments of the present invention are widely applicable as an anode electrode for a secondary battery having a cathode and an anode for releasing and receiving therebetween the same kind of metal ion. Batteries, to which the anode electrode of the present invention is applicable, include: a lithium ion secondary battery which releases and receives lithium ion as metal ion; a sodium ion secondary battery which releases and receives sodium ion as metal ion; and a potassium ion secondary battery which releases and receives potassium ion as metal ion. Particularly, the lithium ion secondary battery is desirable, which is capable of achieving a higher energy density and a higher output density, and which is strongly desired to perform a high-speed charge with a larger electric current as a driving electric-power source for a vehicle. This is because, it becomes possible to constitute a battery suitable for high-speed charge with an electric current larger than the conventional, by adopting the anode electrode of the present invention. There will be thus described hereinafter a lithium ion secondary battery adopting the anode electrode of the present invention, but the present invention is never limited thereto.

It is enough that lithium ion secondary batteries aimed at by the present invention are those adopting the above described anode electrode of the present invention, and other constituting requirements are not particularly limited. There will be thus described hereinafter an ordinary type of lithium ion secondary battery adopting the anode electrode of the present invention, i.e., a lithium ion secondary battery which is not a bipolar type, with reference to the drawings. Note that a more preferable bipolar type lithium ion secondary battery is described later in a manner that many constituting requirements are applicable to both types, so that the pertinent details of such requirements are to be explained only in the description of the more appropriate one of the above types so as to avoid redundancy.

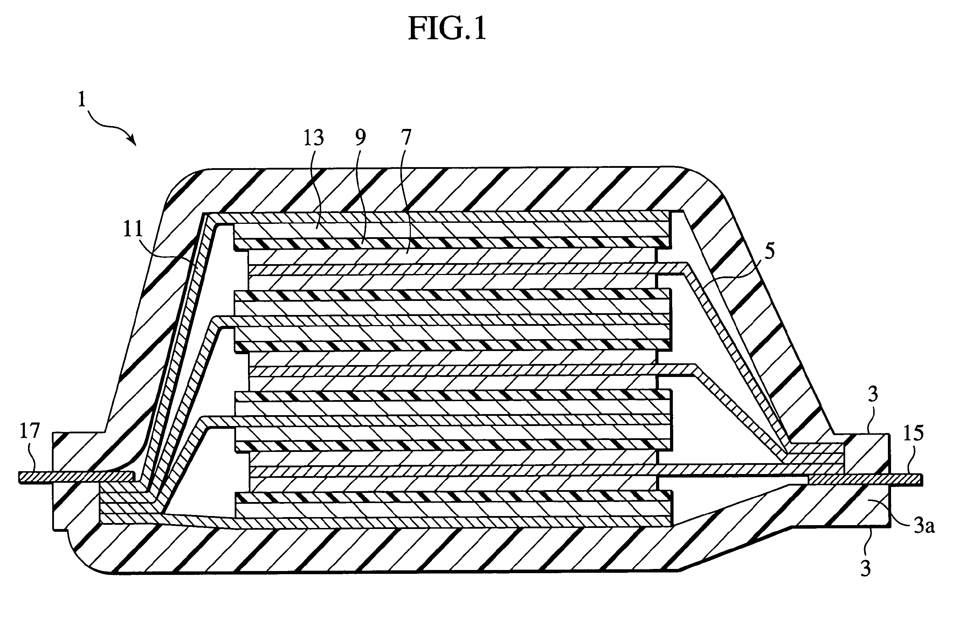

FIG. 1 shows a stacked type of lithium ion secondary battery, which is not a bipolar type. The lithium ion secondary battery 1 shown in FIG. 1 has power generating elements including: cathode layers 7 including cathode active materials and located at both surfaces of each of cathode collectors 5, respectively; electrolyte layers 9; and anode layers 13 including anode active materials and located at both surfaces of each of anode collectors 11; which are all stacked in a duly alternating manner. Battery packaging materials 3 are provided by adopting polymer-metal composite laminated films which are thermally welded to one another at peripheral portions thereof to thereby accommodate and hermetically seal the power generating elements within the battery packaging materials. Cathode lead 15 and anode lead 17 to be electrically connected to the electrode layers are attached to the cathode collectors 5 and anode collectors 11 of the electrode such as by ultrasonic welding or resistance welding, respectively, thereby exhibiting a structure in which these leads are gripped between thermally welded portions 3a and exposed to the exterior of the battery packaging materials 3.

Note that the detailed constitutions of the cathode layer, electrolyte layer, collector, electrode lead and battery packaging material are the same as those in the bipolar battery to be described later, and will be thus explained in detail later.

Further, the cathode is to be referred to embrace even the cathode lead attached to tip ends of the cathode collectors, in addition to the cathode collectors and cathode layers, as the case may be. Similarly, the anode is to be referred to embrace even the anode lead attached to tip ends of the anode collectors, in addition to the anode collectors and anode layers, as the case may be. Thus, the power generating elements of the present invention can be regarded to include the anode layers, the anode lead electrically connected to the anode layers, the electrolyte layers, the cathode layers, and the cathode lead electrically connected to the cathode layers, all of which constitute the power generating elements.

The lithium ion secondary battery is preferably established into a battery structure of a stacked type. In case of a battery structure of a cylinder type, it is sometimes difficult to enhance the sealability at portions through which the cathode lead and anode lead are taken out, thereby failing to ensure a long-term reliability of the sealability at the lead taking-out portions of batteries having higher energy density and higher output density to be installed in an electric vehicle or hybrid electric vehicle. Nonetheless, adoption of the stacked type structure allows to ensure the long-term reliability by virtue of a sealing technique such as simple thermo-compression bonding, thereby providing advantages in cost and workability.

In the present invention, the power generating elements including the stacked cathode layers, electrolyte layers and anode layers are prepared as follows. The cathode layers are supported by the cathode collectors, respectively, by coating a cathode active material and a polymer which has absorbed and retains therein an electrolysis solution onto both surfaces of a reacting portion of each cathode collector, and by thereafter drying the cathode active material. Further, the anode layers are supported by the anode collectors, respectively, by coating an anode active material and a polymer which has absorbed and retains therein an electrolysis solution onto both surfaces of a reacting portion of each anode collector, and by thereafter drying the anode active material. These elements are brought into the stacked state shown in FIG. 1 and then integrated with one another by thermal bonding, thereby preparing the power generating elements.

From a standpoint of an electrical connecting configuration within a battery, the lithium ion secondary battery of the present invention is also applicable to a bipolar type lithium ion secondary battery, in addition to the above described lithium ion secondary battery which is not a bipolar type. From a differentiating standpoint of structure of a lithium ion secondary battery, the present invention is not particularly limited to a stacked type battery and a cylinder type battery, and is applicable to both of them. Also from a differentiating standpoint of a kind of electrolyte of a lithium ion secondary battery, the present invention is not particularly limited, and is applicable to any of a solution-based electrolyte type battery, a polymer gel electrolyte type battery, a solid polymer electrolyte type battery, and the like. Preferably, the present invention is applied to a bipolar type lithium ion secondary battery taking a structure including serially stacked multiple bipolar electrodes while interposing electrolyte layers therebetween, respectively, in which each bipolar electrode includes a collector having one surface formed with a cathode and the other surface formed with an anode. This is because, the bipolar type lithium ion secondary battery has a higher voltage of a single cell as compared with that of an ordinary battery, thereby enabling to constitute a battery excellent in a capacity and an output characteristic. Namely, adoption of the anode electrode of the present invention in a bipolar battery allows to advantageously constitute the battery having a higher voltage and a higher output. Further, when the present invention is applied to a bipolar type lithium ion secondary battery adopting a lithium transition-metal composite oxide which is an inexpensive material as a cathode active material for a cathode, there can be constituted a battery having an excellent reactivity, an excellent cycle durability as well as superior output characteristic. Moreover, when the present invention is applied to a bipolar type lithium ion secondary battery adopting an electrolyte of gel or solid polymer, there is avoided liquid leakage, thereby allowing to advantageously constitute a bipolar battery free of problem of liquid junction and having a higher reliability and a superior output characteristic even by a simple constitution.

There will be explained hereinafter the bipolar type lithium ion secondary battery (hereinafter also called "bipolar battery") which is one preferred embodiment of lithium ion secondary battery of the present invention, with reference to the drawings.

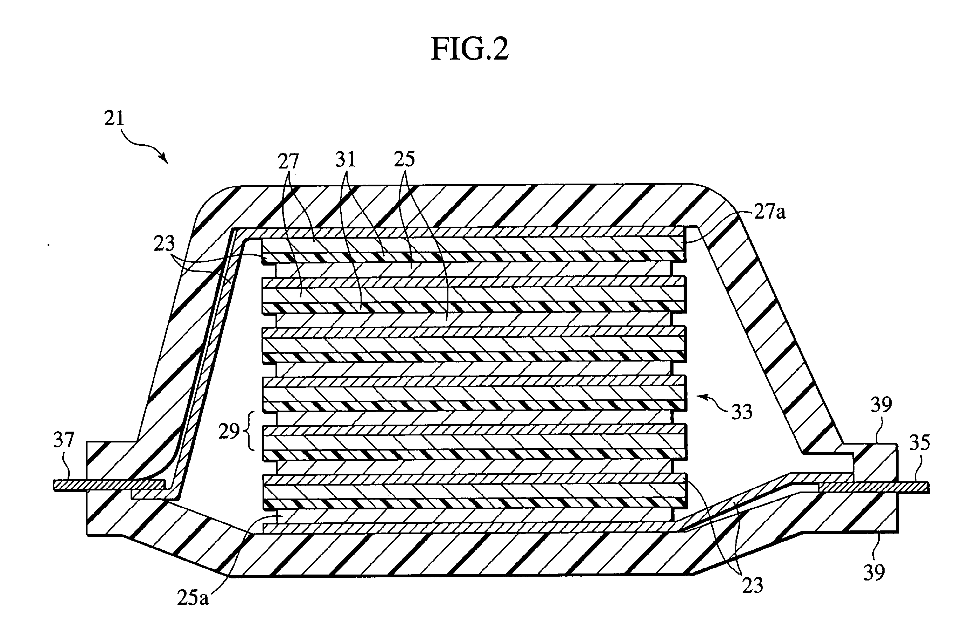

As shown in FIG. 2, the bipolar battery 21 includes bipolar electrodes 29 each including a collector 23, and the collector 23 is constituted of one, two or more layers and has one surface provided with a cathode layer 25 and the other surface provided with an anode layer 27. Further, the bipolar battery 21 is constituted such that the bipolar electrodes 29 are opposed to adjacent bipolar electrodes 29 through electrolyte layers 31, respectively. Namely, the bipolar battery 21 comprises an electrode-stacked assembly 33 having a structure provided by stacking multiple bipolar electrodes 29 via electrolyte layers 31, where each bipolar electrode 29 includes the associated collector 23 having one surface provided with the associated cathode layer 25 and the other surface provided with the associated anode layer 27. Each of the electrodes at the uppermost layer and lowermost layer of the electrode-stacked assembly 33 is not required to have a bipolar electrode structure, and may have a structure having one surface provided with a cathode layer 25a or anode layer 27a. In the bipolar battery 21, the collectors 23 at the lower and upper ends are joined with cathode lead 35 and anode lead 37, respectively. Note that the number of stacked bipolar electrodes is adjusted depending on the desired voltage. In the present invention, the number of stacked bipolar electrodes may be decreased, since a sufficient output can be ensured even by an extremely decreased thickness of the sheet-like battery. To prevent an impact from the exterior and avoid the environmental degradation upon usage of the bipolar battery 21 of the present invention, it is preferable to employ a structure including the electrode-stacked assembly 33 encapsulated within a battery packaging material 39 under reduced pressure, and including the cathode and anode leads 35, 37 taken out of the battery packaging material 39. From a standpoint of light-weight nature, it is desirable to exemplarily adopt polymer-metal composite laminated films and to join them to one another at a part or whole of the peripheral portions thereof by thermal welding to thereby accommodate and hermetically seal the electrode-stacked assembly 33 within the thus constituted battery packaging material 39 such that the electrode leads 35, 37 are taken out of it.

There will be explained hereinafter constituent elements of the bipolar battery of the present invention.

### (Collector)

In the present invention, the following can be used as the collector. For example, there can be preferably used: an aluminum foil; a stainless steel (SUS) foil; a cladding material made of nickel and aluminum; a cladding material made of copper and aluminum; a cladding material made of stainless steel and aluminum; and a plating material combining these metals. The collector may be aluminum coated on a surface of metal. It is also possible to use a collector provided by adhering two or more of metal foils to each other. In case of adopting a composite collector, electroconductive metal such as aluminum, aluminum alloy, stainless steel, and titanium is usable as a material of the cathode collector, and aluminum is particularly preferable. Electroconductive metal such as copper, nickel, silver and stainless steel is usable as a material of the anode collector, and stainless steel and nickel are particularly preferable. In case of a composite collector, multiple materials may be directly connected to each other, or such materials may be electrically connected to each other via intermediate electroconductive layer made of a third material.

The thickness of each of the cathode collectors and anode collectors is preferably on the order of 1 to 30 µm, since the anode layer thickness is to be limited to 30 µm or less. It is further preferable that the thickness of the collector is on the order of 1 to 20 µm from a standpoint of a battery having a decreased thickness.

### (Cathode Layer)

It is enough for the constituent material of the cathode layer to include a cathode active material, and the constituent material may additionally and exemplarily include: a conductive material for enhancing the electron conductivity; a binder; a solid electrolyte; and a supporting salt for enhancing the ionic conductivity; as required.

A composite oxide of transition metal and lithium is preferably usable as the cathode active material. Concretely, Li/Mn based composite oxide such as LiMn₂O₄; Li/Co based composite oxide such as LiCoO₂; Li/Cr based composite oxide such as Li₂Cr₂O₇ and Li₂CrO₄; Li/Ni based composite oxide such as LiNiO₂; Li/Fe based composite oxide such as LiFeO₂; and those (such as LiNiₓCo₁₋ₓO₂ (0<x<1)) obtained by partially substituting the transition metal of them by another element are usable. These lithium transition-metal composite oxides are materials having superior reactivity and cycle durability to be achieved at a lower cost. Thus, adoption of these materials as the cathode enables to form a battery having an excellent output characteristic. The cathode active material additionally includes: phosphoric acid compound such as LiFePO₄ of transition metal and lithium, and sulfuric acid compound; transition metal oxide such as V₂O₅, MnO₂, TiS₂, MoS₂, MoO₃, and transition metal sulfide; and PbO₂, AgO and NiOOH.

The conductive material, binder, solid electrolyte and supporting salt other than the cathode active material are the same as those in the above description, so that the explanation thereof shall be omitted here.

Although the cathode layer thickness is not particularly limited and is to be determined in view of the usage (such as importance of output or energy) of the applicable battery, the cathode layer thickness is also preferably on the order of 1 to 30 µm, since the anode layer thickness is to be limited to 30 µm or less.

### (Electrolyte Layer)

Any of (a) polymer gel electrolyte, (b) all solid polymer electrolyte, and (c) a separator impregnated with an electrolysis solution are applicable to the present invention depending on the purpose of use.

### (a) Polymer Gel Electrolyte

The polymer gel electrolyte is not particularly limited, and various ones are usable. Herein, the gel electrolyte means a host polymer which retains an electrolysis solution therein. Note that the difference between the all solid polymer electrolyte and the gel electrolyte is as follows, in the present invention.
- The gel electrolyte means an all solid polymer electrolyte such as polyethylene oxide (PEO) containing an electrolysis solution therein.
- The gel electrolyte also embraces a polymer such as polyvinylidene fluoride (PVDF) without having lithium ion conductivity and retaining an electrolysis solution within the frame of the polymer.
- The ratio of a host polymer to an electrolysis solution both constituting a gel electrolyte is so wide that the all solid polymer electrolyte includes 100% by weight of polymer while the liquid electrolyte includes 100% by weight of electrolysis solution, and all of the intermediates fall into the gel electrolyte.

Although not particularly limited, the host polymer of the gel electrolyte preferably includes polyethylene oxide (PEO), polypropylene oxide (PPO), polyethylene glycol (PEG), polyacrylonitrile (PAN), polyvinylidene fluoride-hexafluoropropylene (PVDF-HFP), poly(methyl methacrylate) (PMMA), and copolymer thereof. The solvent preferably includes ethylene carbonate (EC), propylene carbonate (PC), γ-butyrolactone (GBL), dimethyl carbonate (DMC), diethyl carbonate (DEC), and a mixture thereof.

The electrolysis solution (electrolytic salt and plasticizer) of the gel electrolyte includes the following. As the electrolytic salt, it is desirable to use at least one kind of lithium salt selected from anion salt of inorganic acid such as LiPF₆, LiBF₄, LiClO₄, LiAsF₆, LiTaF₆, LiAlCl₄, and Li₂B₁₀Cl₁₀, and anion salt of organic acid such as LiCF₃SO₃, Li(CF₃SO₂)₂N and Li(C₂F₅SO₂)₂N. As the plasticizer, it is desirable to use an organic solvent such as an aprotic solvent to be provided by mixing at least one kind or two ore more kinds selected from: cyclic carbonates such as propylene carbonate, ethylene carbonate; linear carbonates such as dimethyl carbonate, ethylmethyl carbonate, diethyl carbonate; ethers such as tetrahydrofuran, 2-methyl tetrahydrofuran, 1,4-dioxane, 1,2-dimethoxy ethane, 1,2-dibutoxy ethane; lactones such as γ-butyrolactone; nitriles such as acetonitrile; esters such as methyl proprionate; amides such as dimethyl formamide; and methyl acetate and methyl formate.

The ratio of the electrolysis solution within the gel electrolyte in the present invention is preferably several % by weight to 98% by weight from a standpoint of ionic conductivity. The present invention particularly has its effect for a gel electrolyte including much electrolysis solution at a ratio of 70 or more % by weight.

In the present invention, the amount of electrolysis solution to be contained in the gel electrolyte may be substantially uniform within the gel electrolyte, or may be decreased from the center toward the outer periphery. The former is preferable in that the reactivity can be obtained in a wider region, while the latter is preferable in that the sealability against the electrolysis solution can be improved. In case of the decrease from the center toward the outer periphery, it is desirable to use, as the host polymer, polyethylene oxide (PEO), polypropylene oxide (PPO) or a copolymer thereof.

### (b) All solid polymer electrolyte

Various all solid polymer electrolytes can be used, without particular limitation. Concretely, electrolytes therefor are not limited, insofar as constituted of a polymer having ionic conductivity. The all solid polymer electrolyte exemplarily embraces polyethylene oxide (PEO), polypropylene oxide (PPO) and a copolymer thereof. The all solid polymer electrolyte contains therein a lithium salt for ensuring ionic conductivity. LiBF₄, LiPF₆, LiN(SO₂CF₃)₂, LiN(SO₂C₂F₅)₂, and a mixture thereof are usable as the lithium salt, without limited thereto. The polyalkylene oxide-based polymers such as PEO and PPO can be satisfactorily mixed with lithium salt such as LiBF₄, LiPF₆, LiN(SO₂CF₃)₂, and LiN(SO₂C₂F₅)₂. Further, there can be expressed an excellent mechanical strength, by forming a cross-linking structure among the polymers.

### (c) Separator impregnated with Electrolysis solution

Usable as electrolysis solutions to be impregnated into a separator are those which are the same as the electrolysis solution (electrolytic salt and plasticizer) contained in the polymer gel electrolyte for the cathode layer which has been already explained, and thus the explanation thereof will be omitted here.

Various separators can be used, without particular limitation. It is exemplarily possible to use a porous sheet comprising polymer which absorbs and retains therein the electrolysis solution. A polyolefin-based microporous separator and the like are usable as the porous sheet. The polyolefin-based microporous separator having a chemically stable property against organic solvent exhibits an advantageous effect capable of restricting the reactivity with the electrolyte. The polyolefin-based microporous separator exemplarily embraces: polyethylene (PE); polypropylene (PP); a laminated body having three-layer structure of PP/PE/PP; and polyimide.

The thickness of the separator cannot be unequivocally defined, because it differs depending on the usage. Nonetheless, the thickness is desirably 1 to 30 pm, and preferably 5 to 20 µm in such usage in a secondary battery for driving a motor in an electric vehicle (EV) or hybrid electric vehicle (HEV), in relation to that the anode layer thickness is limited to a range of 30 µm or less. Thicknesses of the separator within such a range enable to prevent a short circuit to be otherwise caused by biting of fine particles into the separator, while ensuring a mechanical strength of the separator in its thickness direction. Further, since the electrode surface area is increased in case of connecting a plurality of batteries, it is desirable to use a thicker separator within the above range so as to enhance the reliability of the battery.

It is desirable that micropores of the separator have diameters of 1 µm or less at the maximum. If the diameter of micropores of the separator is larger than 1 µm, there is a possibility of occurring a short circuit because of flowing fine particles of the conductive material and the active material contained in the electrode, into the micropores. Here, the averaged diameter of micropores of the separator is calculated as an averaged diameter, by observing the separator such as by a scanning electron microscope and by statistically processing the obtained photograph such as by an image analyzer.

The porosity of the separator is desirably 20 to 50%. The porosity of the separator in the above range enables to ensure both of the output and reliability, in that the output deterioration due to resistance of the electrolyte is prevented, and in that the short circuit to be caused by penetration of the fine particles through the pores of the separator is prevented. Herein, the "porosity" of the separator is a value to be obtained as a volume ratio between a density of a constituent material resin and a density of the separator as a final product.

Although it is enough for the electrolytic solution to be impregnated into the separator up to the due liquid holding limit of the separator, the electrolytic solution may be impregnated up to an amount exceeding such a due limit. This is because, the oozing of electrolytic solution can be prevented by an insulation layer to be described later. It is further possible to leave a solution through-hole in the insulation layer between each two opposed electrodes upon injecting a resin into the insulation layer, in a manner that the solution is injected through the solution through-holes such as by a vacuum solution-injecting method, and then the resin is injected into the solution through-holes to thereby fully seal the through-holes.

Note that the above electrolytes (a) through (c) may be combinedly used in one battery.

While the polymer electrolytes may be included in the polymer gel electrolyte layer, cathode layer and anode layer, it is possible to use the same polymer electrolyte or to use different polymer electrolytes for layer by layer.

Incidentally, the host polymer currently and preferably used for polymer gel electrolytes is a polyether-based polymer such as PEO and PPO. This results in a lower oxidation resistance at the cathode side under a high temperature condition. It is thus desirable that the capacity of the anode is lower than that of the cathode opposing thereto via polymer gel electrolyte layer, in case of adopting a cathode material which has a higher oxidation-reduction potential. Capacities of the anode lower than that of the opposing cathode enable to prevent an excessively raised potential of the cathode at the end of charge. However, it is necessary to pay attention to the charge and discharge voltages, because the anode potential excessively lowers to thereby deteriorate the durability of the battery when the capacity of the anode is lower than that of the opposing cathode. It is exemplarily required to be so careful that the durability is not deteriorated, by setting the averaged charge voltage of one cell (single cell layer) relative to the oxidation-reduction potential of the positive-electrode-aimed active material to be used.

The thickness of each electrolyte layer constituting the battery is not particularly limited. However, it is preferable to reduce the thickness to the minimum so as to obtain a compact bipolar battery, insofar as the function of the electrolyte is ensured. Further, the thickness of the electrolyte layer is about 1 to 30 µm, and preferably 5 to 20 µm, in relation to that the anode layer thickness is limited to 30 µm or less.

### (Insulation layer)

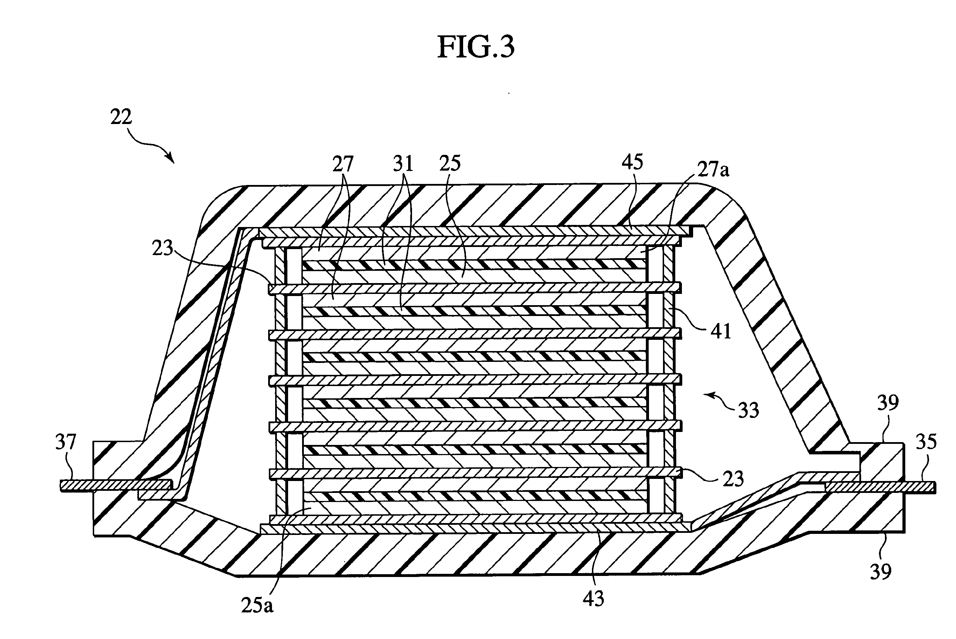

FIG. 3 shows insulation layers 41 formed around the electrodes, for the purpose of exemplarily avoiding contact between adjacent collectors 23 within a battery 22 and avoiding short circuit such as due to slight non-uniformity at end portions of electrodes. In the present invention, the insulation layers 41 may be provided around the electrodes, as required. This is because, even if the short circuit due to the electrolysis solution is perfectly prevented by adopting the solid polymer electrolyte such as when the battery is utilized for driving a vehicle or as an auxiliary electric-power source, the battery is exemplarily applied with vibrations and impacts over a long period of time. It is thus desirable to provide the insulation layers from a standpoint of extended service life of the battery, in ensuring the long-term reliability and safety, and in enabling provision of an electric-power source of larger capacity.

The usable insulation layers are those exemplarily having: insulating property; sealability against dropout of the solid electrolyte, and sealability against moisture permeation from the exterior; and heat resistance at the battery operating temperature; such as epoxy resin, rubber, polyethylene, polypropylene, polyimide, and the epoxy resin is preferable from a standpoint of corrosion resistance, chemical resistance, readiness of production and economical efficiency.

### (Cathode Terminal Plate and Anode Terminal Plate)

FIG. 3 shows a cathode terminal plate 43 and an anode terminal plate 45, which are usable as required. Namely, the electrode terminals may be directly taken out of the outermost collectors 23 depending on the stacking structure of an applicable bipolar type lithium ion secondary battery, and the cathode terminal plate 43 and anode terminal plate 45 may be omitted in such a situation.

In case of using the cathode and anode terminal plates, they are preferably as thin as possible from a standpoint of decreased thickness nature. However, it is desirable for the cathode and anode terminal plates to have a strength capable of retaining the electrodes, electrolytes and collectors from both sides of them because these components have weaker mechanical strength. Further, from a standpoint to restrict the internal resistance at the terminal portions, it is typically desirable that the thicknesses of the cathode and anode terminal plates are on the order of 0.1 to 2 mm.

Usable as the materials of the cathode and anode terminal plates are aluminum, copper, titanium, nickel, stainless steel (SUS) and alloy thereof. Aluminum is preferable such as from a standpoint of corrosion resistance, readiness of production, and economical efficiency. The materials of the cathode terminal plate and anode terminal plate are the same or different from each other. Further, each of the cathode and anode terminal plates may be a laminated body comprising different material layers.

Each of the cathode and anode terminal plates is desirably the same size as a region near an associated folding line to be settled at or outer than the electrode-layer forming portion of the associated collector.

### (Cathode Lead and Anode Lead)

Metals usable as the cathode lead 35 and anode lead 37 can be selected from Cu and Fe, and metals such as Al and stainless steel (SUS) or an alloy material including it are also usable. Cu is desirably used, from a standpoint of restricting an increase of resistance of the whole lead. Further, each lead may be formed with a surface coating layer so as to improve the adherence to a polymer material of the battery packaging material. Most preferably usable as the surface coating layer is nickel (Ni), and metal materials such as silver (Ag) and gold (Au) are also usable. Note that the portions of the leads taken out of the battery packaging material are preferably coated by heat shrinkable tubes having heat resistance and electric insulation property, so as not to exemplarily affect electronic equipments such as due to electric leakage by contact with equipments and wires around the battery.

### (Battery Packaging Material)

In lithium ion secondary batteries without limited to a bipolar type, it is desirable that the whole of the electrode-stacked assembly is accommodated within the battery packaging material or battery casing, so as to prevent impact from the exterior and environmental degradation upon using the battery. From a standpoint of a decreased weight, it is desirable to exemplarily adopt a polymer-metal composite laminated film comprising a metal such as aluminum, stainless steel, nickel or copper having both surfaces coated by an insulator such as polypropylene film. The polymer-metal composite laminated film exemplarily embraces a polypropylene-aluminum composite laminated film. In addition, can formed of aluminum, stainless steel and the like is usable as the packaging.

In a lithium ion secondary battery, it is desirable to accommodate the electrode-stacked assembly within the laminated film and join a part or whole of the peripheral portion of the laminated film by thermal welding, thereby establishing a constitution which hermetically seals the electrode-stacked assembly. In this case, the cathode and anode leads may be structurally interposed between the thermally welded portions and exposed to the exterior of the battery packaging material. It is further desirable to adopt the polymer-metal composite laminated film having a superior thermal conductivity, because the same transmits the heat from the heat source of the vehicle, thereby allowing to rapidly heat the interior of battery to the battery operating temperature. Note that the metal films as constituent elements of the laminated sheet may be directly joined to each other, so as to maximally enhance the long-term reliability of the battery. Ultrasonic welding is usable for removing or breaking a thermally weldable resin existent between metal films, to thereby join the metal films to each other.

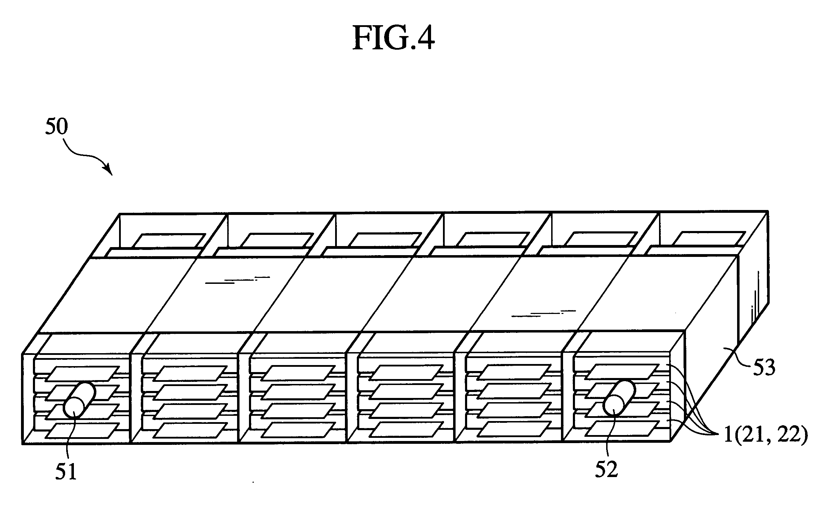

The lithium ion secondary battery of the present invention can be preferably utilized as an electric-power source or auxiliary electric-power source of a vehicle which demands a higher energy density and a higher output density such as an electric vehicle (EV), hybrid electric vehicle (HEV), fuel cell vehicle, and hybrid fuel cell vehicle. In this case, it is desirable that a plurality of lithium ion secondary batteries 1, 21, 22 are connected to constitute an assembled battery 50 as shown in FIG. 4. Namely, at least two or more of the lithium ion secondary batteries 1, 21, 22 of the present invention are used and serially and/or parallelly connected to constitute an assembled battery, thereby allowing to form an assembled battery having a larger capacity and a higher output. This enables to comparatively inexpensively deal with demands for a battery capacity and output for each purpose of use.

Concretely, N pieces of lithium ion secondary batteries 1, 21, 22 are parallelly connected to one another into an N-piece parallel-connection assembly, and M pieces of N-piece parallel-connection assemblies are serially connected to one another and accommodated within an assembled-battery casing 53 made of metal or resin, thereby establishing the assembled battery 50. At this time, the number of serially/parallelly connected lithium ion secondary batteries is to be determined depending on the purpose of use. Further, the electrode leads of the respective lithium ion secondary batteries may be electrically connected to a cathode terminal 51 and an anode terminal 52 for the assembled battery, such as via lead wire. In serially/parallelly connecting lithium ion secondary batteries themselves to one another, they can be electrically connected via suitable connecting members such as spacers or bus bars.

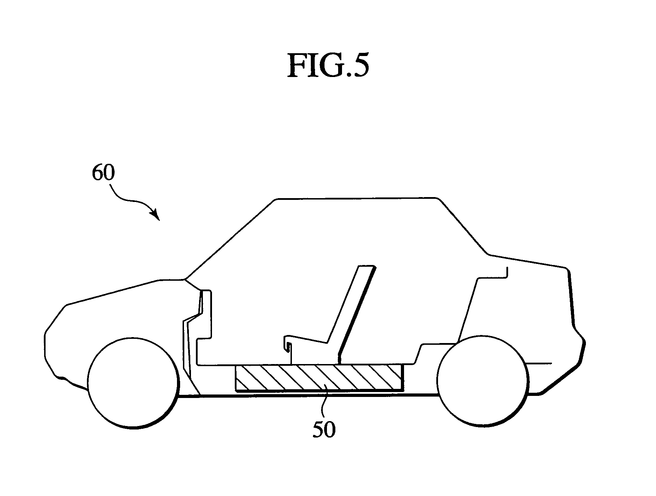

As shown in FIG. 5, the lithium ion secondary batteries 1, 21, 22 and assembled battery 50 of the present invention can be further utilized as a driving electric-power source for a vehicle. The lithium ion secondary batteries 1, 21, 22 and assembled battery 50 of the present invention have various characteristics as described above, and particularly constitute compact batteries, respectively. Thus, these batteries and assembled battery are particularly suitable as driving electric-power sources for vehicles having severe requirements such as electric vehicles and hybrid electric vehicles, thereby allowing to provide electric vehicles and hybrid electric vehicles which are excellent in fuel cost and running performance. As shown in FIG. 5, it is convenient to install the assembled battery 50 of the present invention as a driving electric-power source, under a seat at a central portion of a vehicular body 60, thereby ensuring a wider in-vehicle space and a wider trunk room. However, the present invention is not limited thereto, and the assembled battery or batteries may be installed under the floor, or within the trunk room, engine room, roof or bonnet of the vehicle, for example. It is possible in the present invention to install not only the assembled battery but also the lithium ion secondary batteries, or to install the assembled battery and lithium ion secondary batteries in a combined manner, depending on the intended usage. Further, those vehicles which are capable of installing the lithium ion secondary batteries and assembled battery of the present invention as driving electric-power sources, preferably embrace electric vehicles and hybrid electric vehicles, without limited thereto.

The manufacturing method of the lithium ion secondary battery of the present invention is not particularly limited, and various methods are appropriately available. There will be exemplarily described hereinafter bipolar batteries adopting gel or solid polymer as the electrolyte layers, but the present invention is not limited thereto.

### (1) Coating of Cathode-Aimed Composition

There is firstly prepared a suitable collector. Further, the cathode-aimed composition is made into a slurry which is then coated onto one surface of the collector.

The cathode-aimed slurry is a liquid containing a cathode active material. A conductive material, binder, polymerization initiator, and a host polymer and supporting salt both being constituent materials of the solid electrolyte are arbitrarily contained as other components. The cathode-aimed slurry is obtained by adding the host polymer and conductive material into the liquid containing the cathode active material, further adding the polymerization initiator and supporting salt thereinto, and then stirring the mixture such as by a homo-mixer.

The polymerization initiator is required to be suitably selected such as depending on the polymerizing method (thermal polymerization, ultraviolet polymerization, radiation polymerization, electron-beam polymerization and the like) and depending on the compound to be polymerized. For example, the ultraviolet polymerization initiator embraces benzildimethylketal and the thermal polymerization initiator embraces azobisisobutyronitrile, without limited thereto.

A slurry-viscosity adjusting solvent such as N-methyl-2-pyrrolidone (NMP) or n-pyrrolidone is to be appropriately selected correspondingly to the kind of the cathode-aimed slurry.

The added amounts of the cathode active material, supporting salt and conductive material may be adjusted exemplarily corresponding to the purpose of use of the bipolar battery. The adding amount of the polymerization initiator is determined correspondingly to the number of cross-linking functional groups contained in the polymer constituent material for the solid electrolyte. Typically, the amount is on the order of 0.01 to 1% by weight relative to the polymer constituent material.

### (2) Formation of Cathode Layer

The collector coated with the cathode-aimed slurry is dried to thereby remove the solvent contained in the slurry. Simultaneously therewith, the host polymer is cross-linked such as by heat, thereby forming the cathode layer on the collector. Drying and thermal polymerization can be conducted such as by a vacuum drier. While the drying and cross-linking conditions are determined depending on the coated cathode-aimed slurry and can not be unequivocally defined, the drying and cross-linking conditions are typically 40 to 150 °C for 5 minutes to 20 hours.

### (3) Coating of Anode-Aimed Composition

Anode-aimed slurry containing an anode active material is coated onto a surface of the collector opposite to the surface formed with the cathode layer or onto one surface of an anode collector. In the present invention, the coating amount is adjusted such that the layer thickness of the anode layer to be obtained becomes 30 µm or less, preferably within a range from 1 to 30 µm.

### (4) Formation of Anode Layer

The collector coated with the anode-aimed slurry is dried to thereby remove the solvent contained in the slurry. Simultaneously therewith, the host polymer is cross-linked such as by heat, thereby forming the anode layer on the collector. The drying and cross-linking apparatus and the conditions therefor and the like are the same as those for the cathode layer.

Note that the sequence of the above processes (1) through (4) is duly arbitrary. For example, it is possible that the processes (3) to (4) are firstly conducted and then the processes (1) to (2) are conducted. It is alternatively possible that the processes (1) and (3) are simultaneously conducted for both sides of a collector and then the processes (2) and (4) are simultaneously conducted. Namely, the process sequence is not limited to the sequence of processes (1) through (4) in this order, such that the processes (1) and (3) may be separately conducted, and then the processes (2) and (4) may be simultaneously conducted.

### (5) Preparation of Electrolyte Layer

In case of adopting the all solid polymer electrolyte layer, the layer is manufactured by cross-linking, heating and drying a solution prepared by dissolving a starting polymer (host polymer), a supporting salt and the like for the intended solid electrolyte, in a solvent such as NMP. In case of adopting a polymer gel electrolyte layer, the layer is manufactured by cross-linking, heating and drying a pre-gel solution comprising a host polymer, an electrolysis solution, a lithium salt, a polymerization initiator and the like as the intended polymer gel electrolyte, in an inert atmosphere.

Concretely, the host-polymer-containing solution or pre-gel solution is prepared, which has been provided by adding and mixing the host polymer, polymerization initiator and supporting salt into the solvent. Then, the host-polymer-containing solution or pre-gel solution is coated onto the cathode layer and anode layer manufactured by the above processes (1) through (4). Further, supporting bodies having flat and smooth surfaces are closely contacted with the cathode layer and anode layer coated with the solution, respectively, in a manner to fully eliminate air bubbles. Thereafter, there is exemplarily conducted thermal polymerization in a state maintaining specific layer thicknesses in an inert atmosphere, thereby fabricating solid or gel electrolyte layers or polymer electrolyte layers of predetermined thicknesses, respectively. After completion of the polymerization reaction, the supporting bodies on the cathode layer and anode layer are removed, thereby fabricating the cathode layer and anode layer carrying electrolyte layers on the surfaces thereof, respectively. To attain the layer thickness in a range of 1 to 30 µm for the solid electrolyte layer or gel electrolyte layer between the associated electrodes, it is desirable that the polymerization is conducted in a state capable of maintaining the specific layer thicknesses in the above manner in this process such as by spacers.

After the above host-polymer-containing solution or pre-gel solution is coated onto one or both of the surfaces of the cathode layer and anode layer and then they are clamped between the supporting bodies, it is also possible to exemplarily conduct thermal polymerization. Also in this case, the layer thickness of the solid electrolyte layer or gel electrolyte layer is preferably established to be 1 to 30 µm as described above, which can be controlled by spacers or the like.

It is alternatively possible to separately prepare the solid electrolyte layer or gel electrolyte layer or polymer electrolyte layer to be stacked between electrode layers. In this case, it is possible to fabricate the solid electrolyte layer or gel electrolyte layer or polymer electrolyte layer having a predetermined thickness, by coating the host-polymer-containing solution or pre-gel solution onto the supporting body or suitable releasing film, by closely contacting another supporting body or releasing film therewith in a manner to eliminate air bubbles, and by exemplarily conducting thermal polymerization in a state maintaining the specific layer thickness. Also in this case, the layer thickness of the solid electrolyte layer or gel electrolyte layer is preferably established to be 1 to 30 µm, which can be controlled by spacers or the like.

Selectable as the supporting bodies are optimum ones, such as depending on the polymerizing method. It is possible to exemplarily use a supporting body having ultraviolet transmissivity such as a transparent substrate, in case of conducting the polymerization by irradiating ultraviolet rays. In case of conducting thermal polymerization reaction by heating, it is possible to adopt a supporting body having heat resistance at the heating temperature, such as heat resistant resin film or resin sheet. In case of conducting the polymerization such as by irradiating electron beam or radiation, the electron beam and radiation have a strong transmissivity such that the purpose is achieved even by irradiating it from the electrode side, thereby allowing to use a supporting body capable of maintaining a specific layer thickness.

Since the releasing film is possibly heated to temperatures of about 80 °C during the manufacturing process, it is desirable to adopt such a releasing film, which has a sufficient heat resistance at such temperatures, which has no reactivity with the host-polymer-containing solution or pre-gel solution, and which has an excellent releasing ability because the releasing film is required to be peeled off during the manufacturing process. It is exemplarily possible to adopt a polyethylene terephthalate (PET) film or polypropylene film, without limited thereto. These films may also be used after coating and drying an appropriate mold lubricant such as silicone based mold lubricant thereon.

Concerning a polymerizing apparatus, it is enough to select an apparatus depending on the polymerizing method, in a manner to exemplarily adopt a vacuum drier in case of thermal polymerization reaction. Also concerning the polymerizing condition, it is possible to appropriately select the optimum condition for each polymerizing method. For example, although the conditions for thermal polymerization reaction are determined depending on the solution and can not be unequivocally defined, such a reaction is typically conducted at 30 to 110 °C for 0.5 to 12 hours.

Further, in case of conducting a polymerizing method other than the thermal polymerization, such as ultraviolet polymerization by utilizing an ultraviolet polymerization initiator, it is suitable to pour the above solution into an ultraviolet transmissive gap, to irradiate ultraviolet rays by an ultraviolet irradiating apparatus capable of drying and conducting photopolymerization, and to progress a photopolymerization reaction of the host polymer for the solid electrolyte within the solution or pre-gel solution, thereby forming the intended layer. Naturally, the method is not limited thereto.

Note that the width of the solid electrolyte layer or gel electrolyte layer to be obtained is frequently made slightly smaller than the size of the electrode forming portion of the collector of the bipolar electrode, without particularly limited thereto.

The constituent components of the above solution or pre-gel solution as well as the blending amounts thereof are to be appropriately determined depending on the purpose of use.

### (6) Stacking of bipolar electrodes and Electrolyte Layers

In case of a bipolar electrode formed with the electrolyte layer(s) at one or both sides of the bipolar electrode, the raw bipolar electrode formed with the electrolyte layer(s) is sufficiently heated and dried under high vacuum, and then cut into multiple bipolar electrodes in appropriate sizes, such that a plurality of the cut out bipolar electrodes are stacked to fabricate the electrode-stacked assembly.

Alternatively, when the bipolar electrodes and electrolyte layers are to be separately prepared, the raw bipolar electrode and raw electrolyte layer are sufficiently heated and dried under high vacuum, and then cut into bipolar electrodes and electrolyte layers in appropriate sizes, respectively. The predetermined plurality of cut out bipolar electrodes and electrolyte layers are stacked and mutually bonded, thereby fabricating the electrode-stacked assembly.

The step for obtaining the bipolar battery by stacking the bipolar electrodes and electrolyte layers is preferably conducted in an inert atmosphere, from a standpoint of exemplarily preventing moisture content from entering the bipolar battery. For example, the bipolar battery may be preferably prepared in an argon atmosphere or nitrogen atmosphere.

### (7) Formation of Insulation layer

In the present invention, the periphery of the electrode forming portion of the electrode-stacked assembly is exemplarily immersed into an epoxy resin by a predetermined depth, or a resin is injected into a space around the electrode forming portion. In either case, the collectors are masked by a releasing mask material or the like in advance. Thereafter, the epoxy resin is cured to form an insulative portion, and then the mask material is peeled off.

### (8) Connection of Lead Terminal

The cathode terminal plate and anode terminal plate are arranged on the electron conductive layers which are the opposite outermost layers of the electrode-stacked assembly, respectively, and the cathode lead and anode lead are joined to the cathode terminal plate and anode terminal plate, respectively. Preferably usable as the joining method of the cathode lead and anode lead is ultrasonic welding or the like to be conducted at lower temperatures.

### (9) Packing

Finally, the whole of the electrode-stacked assembly is encapsulated in the battery packaging material or battery casing so as to prevent impact from the exterior and to avoid environmental degradation, thereby completing the bipolar battery. Upon encapsulation, portions of the cathode lead and anode lead are drawn out of the battery.

Effects of the present invention will be described hereinafter based on Examples and Comparative Examples. However, the technical scope of the present invention is not limited to the following Examples.

### (Example 1)

Each cathode was fabricated as follows, in fabricating a battery. Firstly, 85% by weight of LiMn₂O₄ having an averaged particle diameter of 0.5 µm as a cathode active material, 5% by weight of acetylene black as a conductive material, and 10% by weight of polyvinylidene fluoride as a binder were dry mixed, and the same weight of NMP as a solvent was added into the mixture and the obtained mixture was sufficiently stirred to thereby prepare a slurry. Then, the slurry was coated onto an aluminum foil as a cathode collector having a thickness of 20 µm by a coater. The coated foil was heated and dried by a vacuum drier at 90 °C for 2 or more hours to thereby fabricate a cathode. The fabricated cathode was further heated and dried at 90 °C for 12 hours under high vacuum, so as to remove a residual solvent before use.

A polypropylene separator having a thickness of 20 µm was used as each separator.

Each anode was fabricated as follows. Firstly, 90% by weight of boron-added graphite having an averaged particle diameter of 0.5 µm as an anode active material, and 10% by weight of polyvinylidene fluoride as a binder dry were mixed, and the same weight of NMP as a solvent was added into the mixture and the obtained mixture was sufficiently stirred to thereby prepare a slurry. Then, the slurry was coated onto a copper foil as an anode collector having a thickness of 20 µm by a coater. The coated foil was heated and dried by a vacuum drier at 90 °C for 2 or more hours to thereby fabricate an anode. The fabricated anode was further heated and dried at 90 °C for 12 hours under high vacuum, so as to remove a residual solvent before use. The added amount of boron was 2% by weight relative to the whole of boron-added graphite.

Each of the cathode and anode layers was formed to have a thickness of 30 µm.

Thereafter, anodes, separators and cathodes are successively stacked, and this stacked assembly was impregnated with an electrolysis solution of 2 mol/L comprising LiBF₄ and ethylene carbonate-γ-butyrolactone (1:4 volume ratio). Then, the stacked assembly is vacuum sealed within a bag formed of polymer-metal composite laminated films, thereby fabricating a lithium ion secondary battery which is not a bipolar type. There were fabricated totally 30 pieces of the secondary batteries. Each secondary battery had a capacity corresponding to 500 mAh.

Each of 15 pieces of the fabricated batteries was once charged and discharged with an electric current of 500 mA, and then repetitively charged and discharged 100 times with a constant electric current of 5 A and between 4.2 V and 3.0 V. After the discharge and charge, each battery was deconstructed to visually check deposition of lithium.

Each of the remaining 15 pieces was once charged and discharged with an electric current of 500 mA, and then repetitively charged and discharged 100 times with a constant electric current of 10 A and between 4.2 V and 3.0 V. After the discharge and charge, each battery was deconstructed to visually check deposition of lithium.

### (Example 2)

Each battery was fabricated and evaluated in the same manner as Example 1, except that the thickness of each of cathode and anode layers was formed to be 15 µm.

### (Example 3)

Each battery was fabricated and evaluated in the same manner as Example 1, except that the thickness of each of cathode and anode layers was formed to be 5 µm.

### (Example 4)

Each battery was fabricated and evaluated in the same manner as Example 1, except that the thickness of each of cathode and anode layers was formed to be 1 µm.

### (Example 5)

Each battery was fabricated and evaluated in the same manner as Example 1, except that the thickness of each of cathode and anode layers was formed to be 0.8 µm.

### (Comparative Example 1)

Each battery was fabricated and evaluated in the same manner as Example 1, except that the thickness of each of cathode and anode layers was formed to be 70 µm.

### (Comparative Example 2)

Each battery was fabricated and evaluated in the same manner as Example 1, except that the thickness of each of cathode and anode layers was formed to be 50 µm.

### (Example 6)

Each battery was fabricated and evaluated in the same manner as Example 1, except that graphite not added with boron was used instead of boron-added graphite and the thickness of each of cathode and anode layers was formed to be 0.8 µm.

### (Comparative Example 3)

Each battery was fabricated and evaluated in the same manner as Example 1, except that graphite not added with boron was used instead of boron-added graphite and the thickness of each of cathode and anode layers was formed to be 30 µm.

### (Comparative Example 4)

Each battery was fabricated and evaluated in the same manner as Example 1, except that graphite not added with boron was used instead of boron-added graphite and the thickness of each of cathode and anode layers was formed to be 15 µm.

### (Comparative Example 5)

Each battery was fabricated and evaluated in the same manner as Example 1, except that graphite not added with boron was used instead of boron-added graphite and the thickness of each of cathode and anode layers was formed to be 5 µm.

### (Comparative Example 3)

Each battery was fabricated and evaluated in the same manner as Example 1, except that graphite not added with boron was used instead of boron-added graphite and the thickness of each of cathode and anode layers was formed to be 1 µm.

### (Example 7)

Each battery was fabricated and evaluated in the same manner as Example 1, except that boron-added hard carbon was used instead of boron-added graphite and the thickness of each of cathode and anode layers was formed to be 30 µm. The added boron amount was 2% by weight relative to the whole of boron-added hard carbon.

### (Example 8)

Each battery was fabricated and evaluated in the same manner as Example 1, except that boron-added hard carbon was used instead of boron-added graphite and the thickness of each of cathode and anode layers was formed to be 15 µm. The added boron amount was 2% by weight relative to the whole of boron-added hard carbon.

### (Example 9)

Each battery was fabricated and evaluated in the same manner as Example 1, except that boron-added hard carbon was used instead of boron-added graphite and the thickness of each of cathode and anode layers was formed to be 5 µm. The added boron amount was 2% by weight relative to the whole of boron-added hard carbon.

### (Example 10)

Each battery was fabricated and evaluated in the same manner as Example 1, except that boron-added hard carbon was used instead of boron-added graphite and the thickness of each of cathode and anode layers was formed to be 1 µm. The added boron amount was 2% by weight relative to the whole of boron-added hard carbon.

### (Example 11)

Each battery was fabricated and evaluated in the same manner as Example 1, except that boron-added hard carbon was used instead of boron-added graphite and the thickness of each of cathode and anode layers was formed to be 0.8 µm. The added boron amount was 2% by weight relative to the whole of boron-added hard carbon.

### (Comparative Example 7)

Each battery was fabricated and evaluated in the same manner as Example 1, except that boron-added hard carbon was used instead of boron-added graphite and the thickness of each of cathode and anode layers was formed to be 70 µm. The added boron amount was 2% by weight relative to the whole of boron-added hard carbon.

### (Comparative Example 8)

Each battery was fabricated and evaluated in the same manner as Example 1, except that boron-added hard carbon was used instead of boron-added graphite and the thickness of each of cathode and anode layers was formed to be 50 µm. The added boron amount was 2% by weight relative to the whole of boron-added hard carbon.

### (Example 12)

Each battery was fabricated and evaluated in the same manner as Example 1, except that hard carbon not added with boron was used instead of boron-added graphite and the thickness of each of cathode and anode layers was formed to be 0.8 µm.

### (Comparative Example 9)

Each battery was fabricated and evaluated in the same manner as Example 1, except that hard carbon not added with boron was used instead of boron-added graphite and the thickness of each of cathode and anode layers was formed to be 30 µm.

### (Comparative Example 10)

Each battery was fabricated and evaluated in the same manner as Example 1, except that hard carbon not added with boron was used instead of boron-added graphite and the thickness of each of cathode and anode layers was formed to be 15 µm.

### (Comparative Example 11)

Each battery was fabricated and evaluated in the same manner as Example 1, except that hard carbon not added with boron was used instead of boron-added graphite and the thickness of each of cathode and anode layers was formed to be 5 µm.

### (Comparative Example 12)

Each battery was fabricated and evaluated in the same manner as Example 1, except that hard carbon not added with boron was used instead of boron-added graphite and the thickness of each of cathode and anode layers was formed to be 1 µm.

### (Example 13)

Each battery was fabricated and evaluated in the same manner as Example 1, except that SnO powder was used instead of boron-added graphite and the thickness of each of cathode and anode layers was formed to be 30 µm.

### (Example 14)

Each battery was fabricated and evaluated in the same manner as Example 1, except that SnO powder was used instead of boron-added graphite and the thickness of each of cathode and anode layers was formed to be 15 µm.

### (Example 15)

Each battery was fabricated and evaluated in the same manner as Example 1, except that SnO powder was used instead of boron-added graphite and the thickness of each of cathode and anode layers was formed to be 5 µm.

### (Example 16)

Each battery was fabricated and evaluated in the same manner as Example 1, except that SnS metal powder was used instead of boron-added graphite and the thickness of each of cathode and anode layers was formed to be 15 µm.

### (Comparative Example 17)

Each battery was fabricated and evaluated in the same manner as Example 1, except that SnO powder was used instead of boron-added graphite and the thickness of each of cathode and anode layers was formed to be 50 µm.

### (Example 17)

Each battery was fabricated and evaluated in the same manner as Example 1, except that GeO metal powder was used instead of boron-added graphite and the thickness of each of cathode and anode layers was formed to be 15 µm.

### (Example 18)

Each battery was fabricated and evaluated in the same manner as Example 1, except that In₂O₃ powder was used instead of boron-added graphite and the thickness of each of cathode and anode layers was formed to be 15 µm.

### (Example 19)

Each battery was fabricated and evaluated in the same manner as Example 1, except that PbO powder was used instead of boron-added graphite and the thickness of each of cathode and anode layers was formed to be 15 µm.

### (Example 20)

Each battery was fabricated and evaluated in the same manner as Example 1, except that Ag₂O powder was used instead of boron-added graphite and the thickness of each of cathode and anode layers was formed to be 15 µm.

### (Example 21)

Each battery was fabricated and evaluated in the same manner as Example 1, except that Sb₂O₃ powder was used instead of boron-added graphite and the thickness of each of cathode and anode layers was formed to be 15 µm.

### (Example 22)

Each cathode was fabricated as follows, in fabricating a battery. Firstly, 85% by weight of LiMn₂O₄ having an averaged particle diameter of 0.5 µm as a cathode active material, 5% by weight of acetylene black as a conductive material, and 10% by weight of polyvinylidene fluoride as a binder were dry mixed, and the same weight of NMP as a solvent was added into the mixture and the obtained mixture was sufficiently stirred to thereby prepare a slurry. Then, the slurry was coated onto one surface of a stainless steel foil (SUS316L) as a collector having a thickness of 20 µm by a coater. The coated foil was heated and dried by a vacuum drier at 90 °C for 2 or more hours to thereby fabricate a cathode.

Each anode was fabricated as follows. Firstly, 90% by weight of boron-added graphite having an averaged particle diameter of 0.5 µm as an anode active material, and 10% by weight of polyvinylidene fluoride as a binder were dry mixed, and the same weight of NMP as a solvent was added into the mixture and the obtained mixture was sufficiently stirred to thereby prepare a slurry. Then, the slurry was coated by a coater onto a reverse surface of the stainless foil having one surface previously coated with the cathode. The coated foil was heated and dried by a vacuum drier at 90 °C for 2 or more hours to thereby fabricate an anode. The fabricated cathode and anode were further heated and dried at 90 °C for 12 hours under high vacuum, so as to remove a residual solvent before use. The added amount of boron was 2% by weight relative to the whole of boron-added graphite.

Each of the cathode and anode layers was formed to have a thickness of 15 µm.

A polypropylene separator having a thickness of 20 µm integrated with a gel was used as an electrolyte. The gel contains: 10 parts by weight of 2 mol/L of LiBF₄ and ethylene carbonate-γ-butyrolactone (1:4 volume ratio); and 90 parts by weight of PEO frame.

Thereafter, obtained cathode/collector/anode combinations and electrolytes were alternately and successively stacked such that the cathode side of each cathode/collector/anode combination is opposed to the anode side of the adjacent cathode/collector/anode combination, thereby fabricating a lithium ion secondary battery of a bipolar type using gel electrolyte and including 10 layers of such combinations. At this time, single-side coated collectors were used as electrodes only at both outermost layers, respectively.

This stacked assembly was vacuum sealed within a bag formed of polymer-metal composite laminated films, thereby fabricating a battery having a capacity corresponding to 50 mAh. There were fabricated totally 30 pieces of batteries.

Each of 15 pieces of the fabricated batteries was once charged and discharged with an electric current of 50 mA, and then repetitively charged and discharged 100 times with a constant electric current of 500 mA and between 42 V and 30 V. After the discharge and charge, each battery was deconstructed to visually check deposition of lithium.

Each of the remaining 15 pieces was once charged and discharged with an electric current of 50 mA, and then repetitively charged and discharged 100 times with a constant electric current of 1 A and between 42 V and 30 V. After the discharge and charge, each battery was deconstructed to visually check deposition of lithium.

### (Comparative Example 14)

Each battery was fabricated and evaluated in the same manner as Example 22, except that graphite not added with boron was used instead of boron-added graphite.

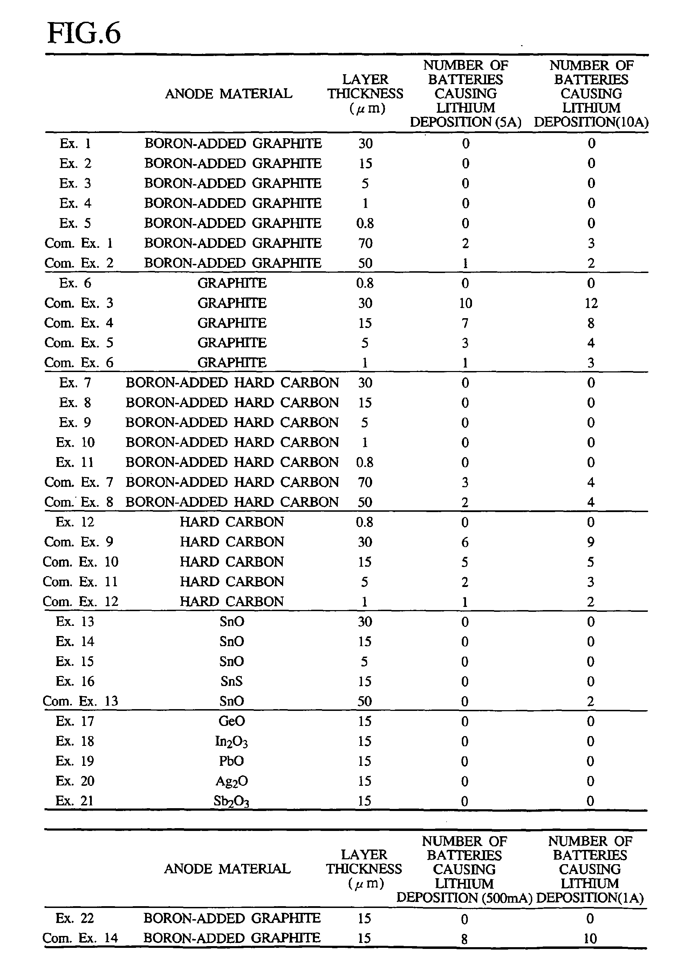

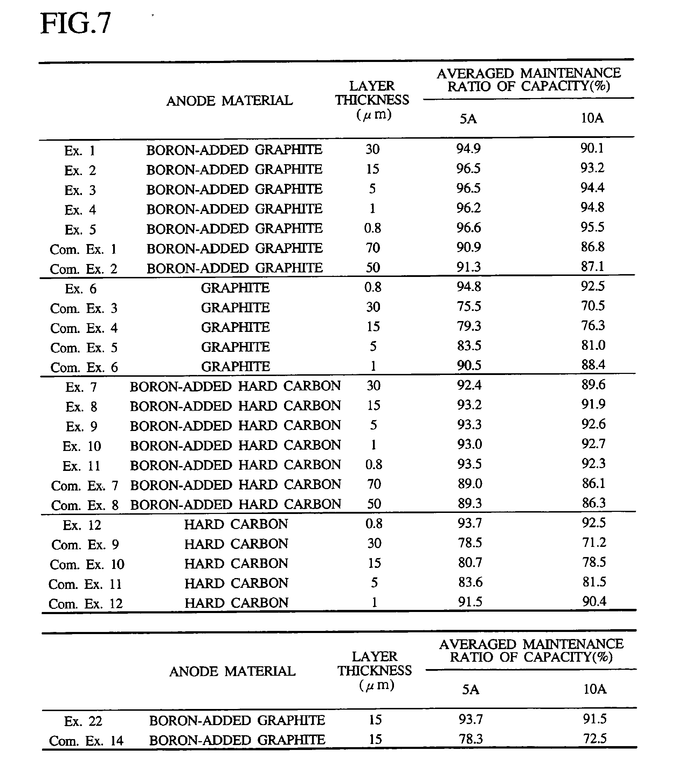

The results of the above are summarized in FIGS. 6 and 7. FIG. 6 shows the numbers of batteries causing lithium deposition in the Examples and Comparative Examples. FIG. 7 shows an averaged maintenance ratio of capacity in each of the batteries of Examples and Comparative Examples. Note that the term "maintenance ratio of capacity" means a ratio of a battery capacity at the 100th discharge and charge to a battery capacity at the first discharge and charge.

The result of FIG. 6 shows that electrode thicknesses exceeding 30 µm may be ineffective against lithium deposition even when the material of the present invention is utilized, and electrode thicknesses of 30 µm or less enable to avoid a possibility of lithium deposition.

Mutually comparing the maintenance ratios of capacity of FIG. 7, it can be further understood that cycle life exceeding that of the conventional battery is obtained by adopting the present invention.

Further comparing Example 22 with Comparative Example 14, it is additionally understood that the present invention can also be applied to a bipolar battery and has an effect in fabricating a battery of higher voltage and larger output.

From the above, it is understood that the present invention is effective in fabricating a battery for flowing therethrough a larger electric current and having a longer service life with excellent reliability and safety.

The entire content of a Japanese Patent Application No. P2003-126235 with a filing date of May 1, 2003 is herein incorporated by reference.

Although the invention has been described above by reference to certain embodiments of the invention, the invention is not limited to the embodiments described above will occur to these skilled in the art, in light of the teachings. The scope of the invention is defined with reference to the following claims.

## Claims

1. An anode electrode for a secondary battery having a cathode and an anode for releasing and receiving the same kind of metal ion therebetween, comprising:
an anode layer (13, 27) including at least one of: oxide, sulfide and salt of other metal which forms an alloy with the metal to be obtained by reducing the metal ion; and boron-added carbon,
wherein the anode layer (13, 27) has a thickness of 30 µm or less.

2. An anode electrode according to claim 1,
wherein the anode layer (13, 27) has a thickness between 1 µm inclusive and 30 µm inclusive.

3. An anode electrode according to claims 1 or 2,
wherein the other metal is at least one metal selected from tin, germanium, indium, lead, silver and antimony, and
the boron-added carbon is boron-added amorphous carbon or boron-added graphite.

4. An anode electrode for a secondary battery having a cathode and an anode for releasing and receiving the same kind of metal ion therebetween, comprising:
an anode layer (13, 27) including carbonaceous material;
wherein the anode layer (13, 27) has a thickness less than 1 µm.

5. An anode electrode according to claim 4,
wherein the carbonaceous material is amorphous carbon or graphite.

6. A lithium ion secondary battery, comprising:
an anode electrode including an anode layer (13, 27) having at least one of: oxide, sulfide and salt of metal which forms an alloy with lithium; and boron-added carbon;
a cathode electrode including a cathode layer (7, 25); and
an electrolyte (9, 31) interposed between the cathode electrode and the anode electrode;
wherein the anode layer (13, 27) has a thickness of 30 µm or less.

7. A lithium ion secondary battery according to claim 6,
wherein the lithium ion secondary battery (21, 22) has a structure including a plurality of bipolar electrodes (29) serially stacked by interposing electrolyte (31) therebetween, each bipolar electrode (29) including a collector (31) having one surface formed with the cathode layer (25) and the other surface formed with the anode layer (27).

8. A lithium ion secondary battery according to claims 6 or 7,
wherein the cathode layer (7, 25) includes a cathode active material which is a lithium transition-metal composite oxide.

9. A lithium ion secondary battery according to any of claims 6 through 8,
wherein the electrolyte (9, 31) comprises polymer used in a gel form or solid form.

10. A lithium ion secondary battery according to any of claims 6 through 9,
wherein the lithium ion secondary battery (1, 21, 22) is used in an assembled battery (50).

11. A lithium ion secondary battery according to claim 10,
wherein the assembled battery (50) is used for a vehicle (60).

12. A lithium ion secondary battery, comprising:
an anode electrode including an anode layer (13, 27) having carbonaceous material;
a cathode electrode including a cathode layer (7, 25); and
an electrolyte (9, 31) interposed between the cathode electrode and the anode electrode;
wherein the anode layer (13, 27) has a thickness less than 1 µm.

13. A lithium ion secondary battery according to claim 12,
wherein the lithium ion secondary battery (21, 22) has a structure including a plurality of bipolar electrodes (29) serially stacked by interposing electrolyte (31) therebetween, each bipolar electrode (29) including a collector (31) having one surface formed with the cathode layer (25) and the other surface formed with the anode layer (27).

14. A lithium ion secondary battery according to claims 12 or 13,
wherein the cathode layer (7, 25) includes a cathode active material which is a lithium transition-metal composite oxide.

15. A lithium ion secondary battery according to any of claims 12 through 14,
wherein the electrolyte (9, 31) comprises polymer used in a gel form or solid form.

16. A lithium ion secondary battery according to any of claims 12 through 15,
wherein the lithium ion secondary battery (1, 21, 22) is used in an assembled battery (50).

17. A lithium ion secondary battery according to claim 16,
wherein the assembled battery (50) is used for a vehicle (60).
